# EUROPEAN PATENT APPLICATION

(11) **EP 1 993 065 A1**
(43) Date of publication of application: **19.11.2008**
(21) Application number: 08004642.8
(22) Date of filing: 13.03.2008
(51) Int. Cl.: G06Q 10/00

(54) **System for determining a human occupation of rooms**

(30) Priority: 13.03.2007 NL 1033536
(71) Applicant: GTI Noord BV, 9301 ZV Roden (NL)
(72) Inventor: Hummel, Wisse, 9342 TM EEN (NL)
(74) Representative: Mertens, Hans Victor

(57) **Abstract**

A system for determining a human occupation of a number of rooms (2a, 2b, 2c) comprises a number of presence measuring devices (4a, 4b, 4c) for the rooms. The presence measuring devices provide a presence indication 'free' if no persons are present and 'occupied' if persons are present in the rooms. A data processing device (10) is configured for reading-out the presence measuring devices, wherein for each room in a memory device at least combinations are registered of an identification indication concerning an identification of the room, the presence indication pertaining to the room, and a time stamp indication concerning the current date and time of registration of the presence indication. The data processing device is further configured for receiving an input from an input device and, in response thereto, representing, on the basis of the combinations of indications stored in the memory device, an overview of the rooms and their human occupation over time.

## Description

The present invention relates to a system, in particular to a system implemented using a computer, for determining a human occupation of a number of rooms.

In the management of rooms, such as classrooms, conference rooms, workrooms and the like, in one or more buildings, such as schools, factories, offices, hospitals, nursing homes and the like, the use of the rooms plays an important part. An important indicator for the use of the rooms is the presence or absence of persons in the rooms. Perennial issues in this regard relate to finding a suitable room for a specific activity involving one or more persons, both immediately and in the future, to finding of suitable room comprising desired facilities, to determining the need to increase the number of available rooms or else the possibility of reducing the number of available rooms within an optimisation of the use of available rooms, to energy consumption of the rooms or to other aspects.

Although rooms in buildings are nowadays often used on the basis of a plan or planning, usually the insight beforehand into the requirements and the use over time is merely moderate. In addition, it is not possible subsequently to establish with any degree of accuracy whether the rooms were used as expected. The situation is further complicated if (a decision with regard to) the use of the rooms is carried out in part on an ad hoc basis, so planning in advance is scarcely or not possible. Also, if there is a need for rooms comprising specific facilities, such as a projection device, one or more computers, a specific capacity of persons, or the like, the use of the rooms and the planning of the use of the rooms is still more complex.

The invention seeks in this situation to make a significant improvement and provides for this purpose in an embodiment a system for determining a human occupation of a number of rooms which are intended for a specific activity involving one or more persons, which system comprises: a number of presence measuring devices for the measuring of human presence in the rooms, at least one presence measuring device being provided in each room, and the presence measuring device being configured for the providing of a presence indication which represents a 'free' indicator if no persons are present in the corresponding room and represents an 'occupied' indicator if persons are present in the corresponding room; and a data processing device which is coupled to a memory device, an input device and an output device, and is configured for reading-out the presence measuring devices, and the storage for each room, in accordance with a predetermined scheme in the memory device, of at least combinations of: (1) an identification indication concerning an identification of the room, (2) the presence indication pertaining to the room, and (3) a time stamp indication concerning the current date and time of registration of the presence indication, and wherein the data processing device further is configured for: receiving an input from the input device; and, in response to the input from the input device, representing, on the basis of the combinations of indications stored in the memory device and using the output device, an overview of rooms and their human occupation over time.

A presence measuring device can be a device which is configured for the detecting of movement (a movement sensor), heat (an infrared sensor), sound, light or any other form of energy.

A data processing device comprises at least one computer, or for example a number of computers which are coupled to one another in a network, such as an Ethernet network, the Internet, or the like.

A coupling between a presence measuring device and the data processing device, or a coupling between computers, or a coupling between a memory device, an input device, an output device and the data processing device, can be wired or wireless.

The data processing device can further comprise control devices, such as PLCs (programmable logic controllers), wherein the control devices can read out the presence measuring devices, and can store the combinations of indications thus obtained decentrally or non-decentrally (the memory device can be centralised or decentralised/distributed), or this data can be read out by a central computer, such as a server, from the control devices or the presence measuring devices in order to be stored in a central memory device.

The control devices can comprise a web server with which at various locations in a network local and global data can be made visible.

A scheme for the registration of the above-mentioned combinations of indications can, for example, be the reading-out at regular intervals (such as once per second, per minute, per five minutes, per quarter of an hour) of the presence measuring devices, either in all cases a combination of indications being stored or exclusively those combinations being stored that indicate an alteration of the presence indication with a 'free' to an 'occupied' indicator or vice versa in relation to a preceding registration. Information, based on which the data processing device can determine periods of time of use or non-use of rooms, is thus stored.

Via the input device and the output device, information can be supplied to the system and retrieved from the system and represented. The input device can comprise any desired input means, such as a keyboard, a mouse, a microphone in combination with a voice control device for inputting voice commands, a touch screen, and the like, which may or may not be in combination with one another. The output device can comprise any desired output means, such as a display or an image screen or a similar representation device for representing images, texts, symbols and graphics, a loudspeaker in combination with a voice synthesis device for representing spoken information, and the like, which may or may not be in combination with one another.

The system according to the invention enables a user to obtain a reliable insight into the current human occupation of each of the rooms or groups of rooms, the human occupation in the past of each of the rooms or groups of rooms, and the human occupation in the future of each of the rooms or groups of rooms (if provision is made to allow rooms to be reserved), and to decide on the basis thereof about (current or future) use of the rooms or groups of rooms.

In the context of the present invention, the term 'a group of rooms' refers to a collection of at least two rooms.

In an embodiment of the system according to the invention, the memory device also contains for each room an occupation indication concerning a maximum number of persons in the room, the data processing device being configured for inputting, using the input device, a number of persons, and the data processing device further being configured for representing, using the output device, which room has a presence indication with a 'free' indicator, and also has an occupation indication which is at least as high as the input number of persons.

A user of the system can thus see and/or hear rapidly (instantaneously) and simply via the output device which rooms are available that are sufficiently large to accommodate a group of a specific number of persons.

In an embodiment of the system according to the invention, the processing device is configured for inputting, using the input device, one or more identification indications and a period of time, and the data processing device further being configured for representing, using the output device, a degree of occupation of the rooms specified by the one or more identification indications in the period of time.

Thus, with the system according to the invention, it is easily possible to register the periods of time of use, set off against the total available time (degree of occupation), of all rooms, and to determine on the basis of a measurement of this type whether there is a structural surplus or shortage of rooms, or specific types of rooms. This enables a building manager to verifiably determine whether there is an efficient ratio between a need for rooms, on the one hand, and the availability of rooms, on the other hand. If there turns out to be a surplus or shortage of rooms, a suitable measure can then be taken, such as renting less space, renting more space or otherwise changing the number and the nature of the rooms.

In an embodiment of the system according to the invention, the data processing device is configured for inputting, using the input device, a reservation of a room to be reserved for a predetermined period of time, the data processing device further being configured for setting the presence indication for the room to be reserved for the respective period of time on the 'occupied' indicator, provided that the presence indication for the respective period of time was initially set to the 'free' indicator.

Thus, a user who is interested in a room (for example, a room which according to the system is found to be free in the specific period of time) can immediately reserve this room for instantaneous or future use to prevent the room from unintentionally being occupied in the desired period of time.

In an embodiment of the system according to the invention, the memory device also contains for each room a facility indication concerning facilities present in the room, the data processing device being configured for inputting, using the input device, a desired facility, and the data processing device further being configured for representing, using the output device, which room has a presence indication with a 'free' indicator, and also has a facility indication which comprises the desired facility.

In an embodiment of the system according to the invention, the data processing device is configured for representing, on the basis of a degree of occupation of a room in a period of time and using the output device, a cleaning indication for the room.

Owing to the possibility which the system according to the invention offers to monitor for specific periods of time whether, and to what degree, each room is used, the system offers a simple indication of the degree of possible soiling of each room. Cleaning of the rooms can be adapted thereto, wherein for example a room which is found on one or more days to have been used only briefly or not to have been used at all is not cleaned in order to save time, materials and costs.

In an embodiment of the system according to the invention, the data processing device is configured for representing, on the basis of a degree of occupation of a room in a period of time and using the output device, a lamp replacement indication for the room.

Owing to the possibility which the system according to the invention offers to monitor for specific periods of time whether, and to what degree, each room is used, the system offers a simple indication of the degree to which the lighting of a room is used. If, for example, it is assumed that each time the room is used the lighting is also used, the system according to the invention allows measurement of the number of hours of operation of a lamp present in a room by measuring the degree of occupation or the number of hours during which the presence indication with the 'occupied' indicator applied to the room concerned. The lamp needs to be replaced only once the number of hours of operation thus determined exceeds the maximum number of hours of operation stipulated by a manufacturer prior to replacement. The system according to the invention can thus advise a building manager as to when replacement is necessary. In this way, the system helps to reduce costs, materials, inconvenience resulting from undesirable lamp failure, and energy.

In an embodiment of the system according to the invention, the data processing device is configured for representing, using the output device, which room or rooms have a presence indication with an 'occupied' indicator.

In the event of a burglar alarm being set off, it can thus be established very rapidly and easily in which room an intruder is located, and appropriate measures can be taken. In the case of an evacuation of the building containing the rooms, it can be established very rapidly and easily whether persons are still in the building, and where they are located, in order to take appropriate measures.

The invention also relates to a computer program containing indicators which are intended to be carried out on the data processing device for the operation of the system described hereinbefore, and to a data carrier comprising a computer program of this type.

The invention will be described hereinafter with reference to the appended drawings showing by way of non-limiting example embodiments of the invention. In the drawings:
Fig. 1 is a diagram of an embodiment of the system according to the invention;
Fig. 2 shows an example of a representation on a screen of an output device which forms part of a system according to the invention, to determine a current occupation of a number of rooms;
Fig. 3 shows a subsequent example of a representation on a screen of an output device which forms part of a system according to the invention, for searching-for and finding an unoccupied room on the basis of a predetermined criterion;
Fig. 4 shows a subsequent example of a representation on a screen of an output device which forms part of a system according to the invention, for representing free rooms on the basis of a predetermined criterion;
Fig. 5 shows a subsequent example of a representation on a screen of an output device which forms part of a system according to the invention, for determining a degree of occupation of a room or a group of rooms;
Fig. 6 shows a subsequent example of a representation on a screen of an output device which forms part of a system according to the invention, for representing degrees of occupation in a period of time for a specific room;
Fig. 7 shows a subsequent example of a representation on a screen of an output device which forms part of a system according to the invention, for representing the degree of occupation of rooms;
Fig. 8 shows a subsequent example of a representation on a screen of an output device which forms part of a system according to the invention, for determining a need to clean rooms; and
Fig. 9 shows a subsequent example of a representation on a screen of an output device which forms part of a system according to the invention, for representing rooms which do not need to be cleaned.

In the various figures, same reference symbols denote similar components, or components which have a similar function.

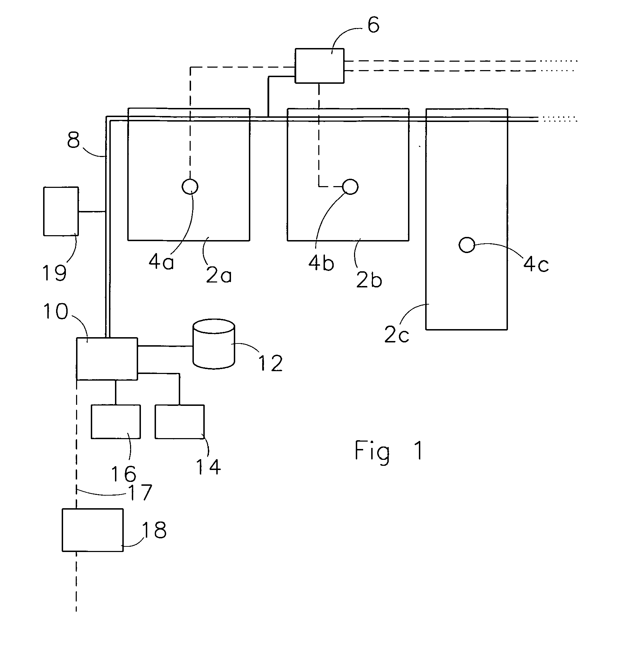

Fig. 1 schematically shows a number of rooms 2a, 2b, 2c which can be located in a single building or in various buildings. In practice, there may be a few, tens, hundreds or thousands of rooms, and one, a few, tens, hundreds or thousands of buildings. To facilitate understanding of the invention, an example has been selected with three rooms which may be located in various buildings at different geographical locations. The rooms 2a, 2b, 2c are each provided with at least one presence measuring device 4a, 4b and 4c respectively. The presence measuring devices 4a, 4b and 4c are configured to detect a human presence in the corresponding rooms 2a, 2b and 2c, respectively, and comprise for this purpose a sensor which reacts to movement, heat, sound or any other energy given off by a human being. Depending on whether or not one or more persons are present in the room, the respective sensor outputs or does not output a presence signal which is stored in a memory (not shown in detail) of the presence measuring device 4a, 4b, 4c in the form of a presence indication. The presence indication can represent at least two indicators which will be designated hereinafter by 'occupied' and 'free', the presence indication with the 'occupied' indicator being produced if human presence is measured in the respective room, and the presence indication with the 'free' indicator being produced when the presence measuring device concerned does not identify any human presence. The presence measuring devices 4a, 4b, 4c are powered by a battery, a storage battery or via a supply or other network, via a wired connection or by means of wireless energy transfer.

A control device 6 is provided for a group of presence measuring devices 2a, 2b, 2c, the control device 6 being configured to read out the presence indication from the presence measuring devices 4a, 4b and 4c at predetermined times. The presence measuring devices 4a, 4b, 4c can for this purpose be connected to the control device 6 via a wired connection, but the reading-out can also be carried out wirelessly. The control device 6 thus collects the presence indications for each room 2a, 2b, 2c for specific times. A system according to the invention can comprise a plurality of control devices for various groups of presence measuring devices.

Each control device 6 is coupled to at least one server (central computer) 10 via a suitable network 8 (which can be both wired and wireless, and can form part of the Internet). A data storage device or memory device 12, an input device 14 and an output device 16 are also coupled to the server 10. Said couplings can be wired or wireless. The server 10 can, in turn, be coupled to another server 18 via a network 17 (not shown in greater detail). One or more other computers 19 (like what are known as clients) comprising input and output devices can also be coupled to the network 8.

Active on the server 10 is a computer program which retrieves the presence indications collected by the control devices 6 and stores them in the memory device 12. The presence indications are in all cases stored in combination with an identification indication which is indicated by the presence measuring device which generated the presence indication, and with a time stamp indication which specifies the date and the time of generation of the presence indication. The aforementioned combination of indications forms the basis for the functioning of the system according to the invention.

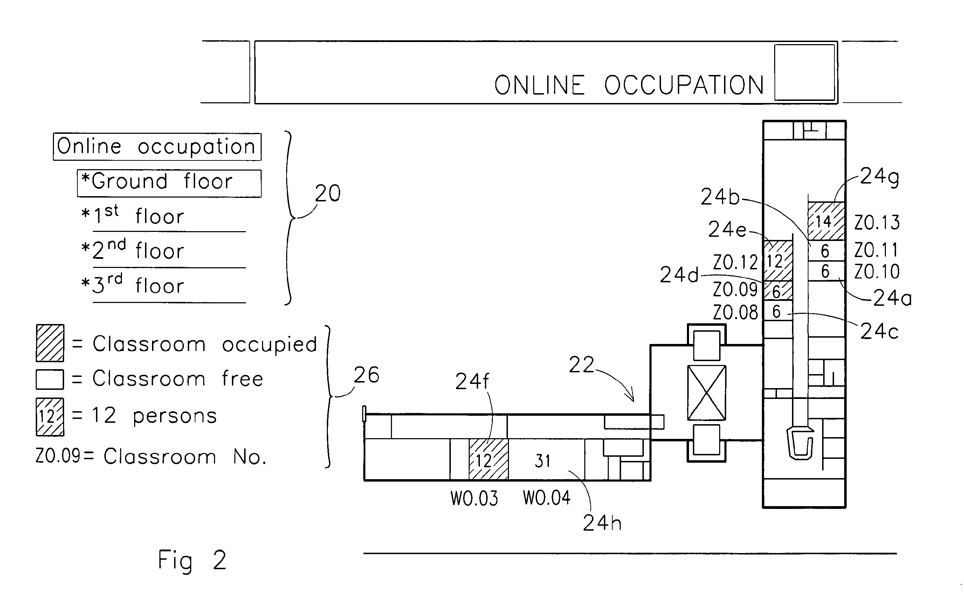

Fig. 2 shows a screen representation which can be generated by the server or a control device. A menu 20 shows available input/selection options for representation, and offers the possibility of showing a current occupation (indicated by 'On-line occupation') of groups of rooms by means of a depiction of a floor plan 22 of a group of rooms selected in the menu 20.

The groups of rooms which can be selected according to the menu 20 are a group of rooms on the ground floor of a building, indicated in the menu 20 by a 'Ground floor' field, and groups of rooms on the first, second and third floors of a building, respectively indicated in the menu 20 by '1^{st} floor', '2^{nd} floor' and '3^{rd} floor' fields. In Fig. 2, it has been selected to represent the occupation of the 'Ground floor' group of rooms, all of the rooms 24a - 24h present on the ground floor being depicted in the floor plan 22. Legend 26 can clarify the meaning of the indications present in the rooms 24a - 24h: various colours can be used to specify whether the respective room is 'occupied' or is 'free'; a number in the room (for example 6, 12, 14, 31) can be used to specify what the maximum capacity of persons in the respective room is, and there is also added to each room a code (for example Z0.09) which has been selected and allocated by a manager of the rooms, and can serve as an identification indication for the respective room.

In the exemplary embodiment, the screen representation is generated on the basis of current indications which are stored in a database which is located in the memory device 12. The time-dependent indications are, in turn, obtained with the aid of presence measuring devices described hereinbefore.

In the example represented in Fig. 2, the rooms 24a, 24b, 24c and 24h are free (i.e. the presence measuring devices have not detected any human presence, and for the rooms the presence indication with the 'free' indicator is currently registered in the memory device 12), whereas the remaining rooms 24d, 24e, 24f and 24g are occupied (i.e. the presence measuring devices have detected a presence of one or more persons, and for the rooms the presence indication with the 'occupied' indicator is currently registered in the memory device 12).

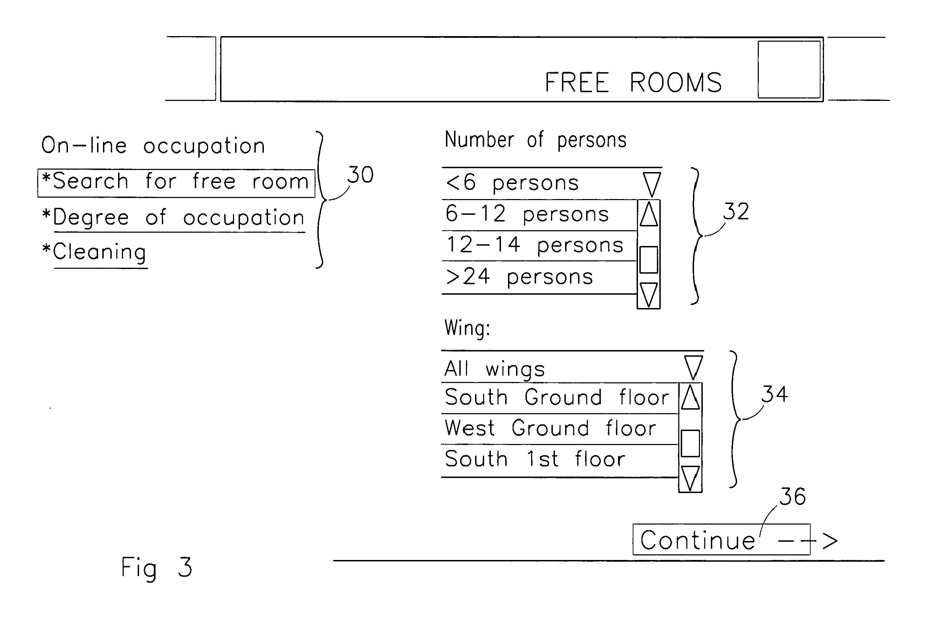

Fig. 3 shows a screen representation which can be generated by the server or a control device. A menu 30 shows available input/selection options for representation, specified by 'On-line occupation' (discussed hereinbefore with reference to Fig. 2), 'Search for free room', 'Degree of occupation' and 'Cleaning' fields. In Fig. 3, an input device has been used to select the 'Search for free room' function which, after a user has entered selection criteria via a presented menu structure, is used to present a currently available free room which satisfies the selection criteria.

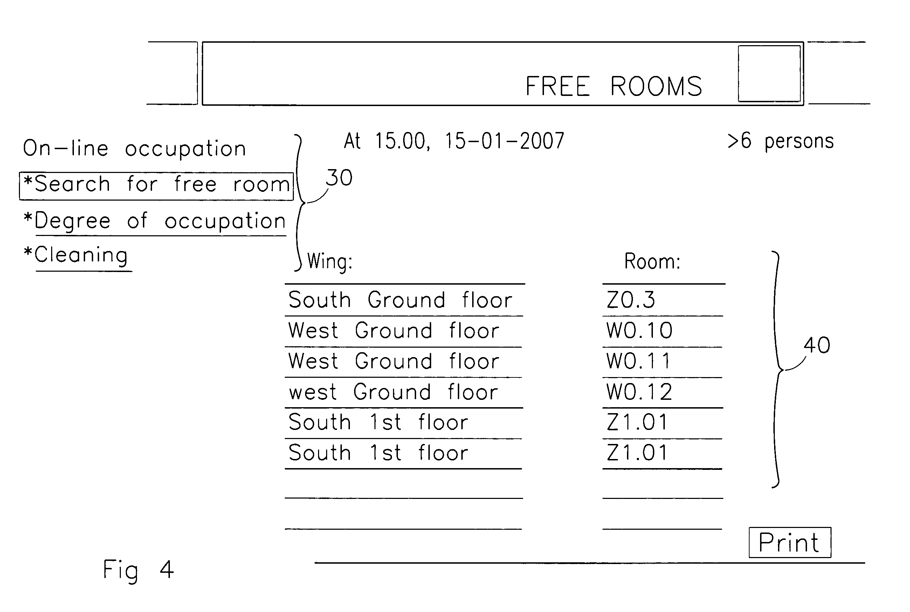

The selection criteria which are provided by the system are the number of persons for whom a room must be found, and a group of rooms within which the room must be found, denoted by 'Number of persons:' and 'Wing:' respectively. A selection menu 32 offers available selection options for the number of persons (less than 6 persons, from 6 to 12 persons, from 12 to 24 persons, and more than 24 persons respectively), and a selection menu 34 offers available selection options for groups of rooms (respectively all groups ('All wings'), or a specific group (respectively 'South Ground floor', 'West Ground floor', 'South 1^{st} floor' and possible other groups which can be specified by scrolling in the menu 34). When a user has indicated a selection in the selection menu 32 and 34 with the aid of an input device, an indicator can be given to the system (indicated by 'Continue' field 36) to represent the available free rooms (i.e. rooms having a presence indication with a 'free' indicator) which satisfy the selection criteria. This is shown in the screen representation according to Fig. 4. The system uses in this case for each room a corresponding, predetermined occupation indication which is stored in the memory device 12 and specifies a maximum number of persons for the respective room, the occupation indication being at least as high as the input number of persons.

It will be clear that, instead of searching for rooms which are not occupied, the system can also be configured in such a way as to represent rooms which are occupied. This is particularly advantageous when the system is used to track down an intruder or another person whose location is unknown, the rooms concerned being otherwise substantially unoccupied. Such a function is also advantageous during evacuation of a building to establish whether the building has been fully evacuated.

Fig. 4 again shows the menu 30, so it is clear which function is being carried out. In addition, the screen representation according to Fig. 4 shows the current date and time ('At 15.00, 15-01-2007:') and a selection criterion for the number of persons ('> 6 persons'), wherein another selection criterion was the representation of rooms in all groups of rooms. There is thus presented a list 40 of groups of rooms ('Wing:') and the room available in the respective group ('Room') that satisfies the selection criterion for the number of persons. Subsequently, the user of the system can make a selection therefrom. Also, in a variation (not shown) of the system, the user could decide to reserve one or more specific rooms, for which purpose suitable input options can be offered via a separate screen representation. In this case, the data processing device is configured for inputting, using the input device, a reservation of a room to be reserved for a predetermined period of time, and the data processing device is further configured for setting the presence indication for the room to be reserved for the respective period of time on the 'occupied' indicator, provided that the presence indication for the respective period of time was initially set to the 'free' indicator.

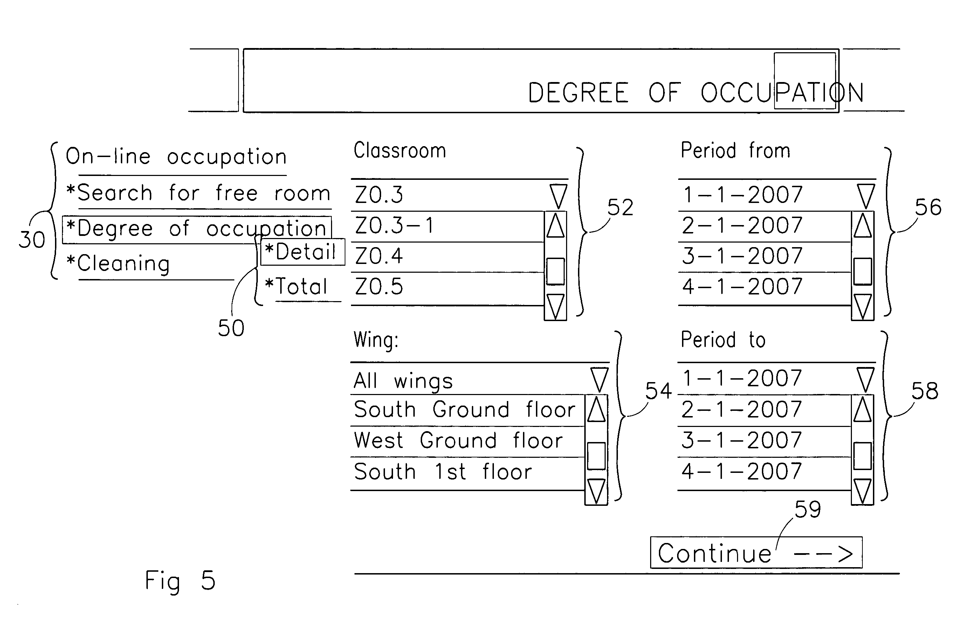

Fig. 5 shows a different screen representation which can be generated by the server or a control device. Fig. 5 again shows the menu 30, so it is clear which function is being carried out. In Fig. 5, there has been selected the 'Degree of occupation' function and, within this, a 'Detail' function which is specified in a submenu 50 and, after a user has entered selection criteria via a presented menu structure, is used to present a degree of occupation of a room or a group of rooms in a specific period of time.

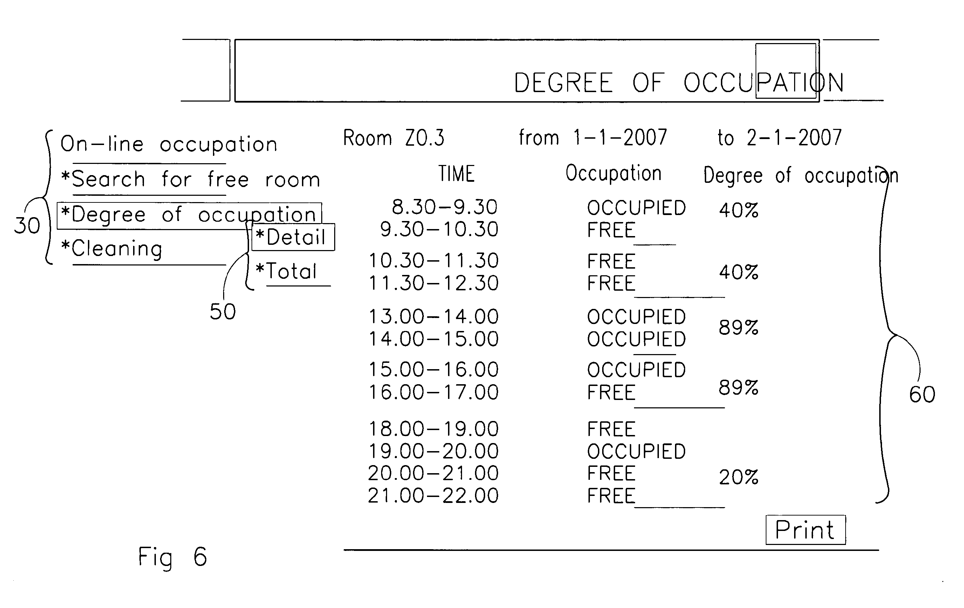

The selection criteria which are provided by the system are a specific room or a specific group of rooms, a start date of a desired period, and an end date of a desired period, indicated by 'Classroom' or 'Wing:', 'Period from' and 'Period to' respectively. A selection menu 52 offers available selection options for the specific room (respectively Z0.3, Z0.3-1, Z0.4, Z0.5 and possible other rooms which can be specified by scrolling in the menu 52), a selection menu 54 offers available selection options for groups of rooms (respectively all groups ('All wings'), or a specific group (respectively 'South Ground floor', 'West Ground floor', 'South 1^{st} floor' and possible other groups which can be specified by scrolling in the menu 54), a selection menu 56 offers available selection options for a start date of a desired period, wherein available data optionally can be specified by scrolling in the menu 56, and a selection menu 58 offers available selection options for an end date of a desired period, wherein available data optionally can be specified by scrolling in the menu 58. When a user has indicated a suitable selection in the selection menus 52 or 54, 56 and 58 with the aid of an input device, an indicator can be given to the system (indicated by 'Continue' field 59) to represent the desired degree of occupation. This is shown in the screen representation according to Figure 6.

Fig. 6 again shows the menus 30 and 50, so it is clear which function is being carried out. In addition, the screen representation according to Fig. 6 shows an entered selection criterion for the room ('Room Z0.3'), the start date of the desired period ('from 1/1/2007') and the end date of the desired period ('to 2-1-2007'). A list 60 of periods of time ('Time'), current occupation ('Occupation') and (average) degree of occupation of the room in the indicated period of time ('Degree of occupation') is thus presented. The system can present the degree of occupation for periods of time in the past, by utilising historical occupation measurements carried out by the system. The system can, if a room reservation option is provided, also present the degree of occupation for periods of time in the future, by utilising registered room reservations, the presence indicator for the respective room(s) being set to the 'occupied' indicator.

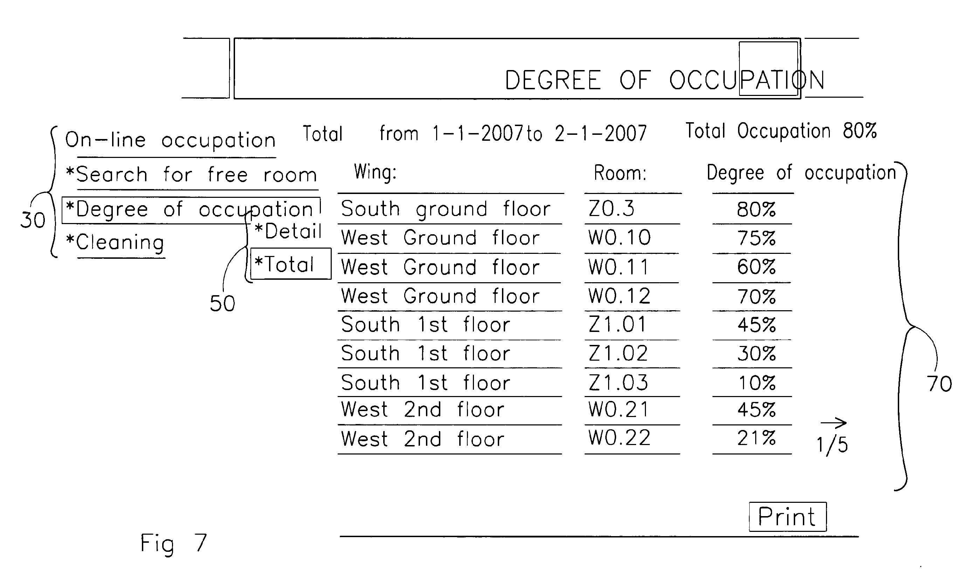

When the 'Total' field is selected in the menu 50 by means of the input device, an overview of rooms and the average degree of occupation over a predetermined period is presented, as is represented in Fig. 7.

Fig. 7 again shows the menus 30 and 50, so it is clear which function is being carried out. In addition, the screen representation according to Fig. 7 shows an entered menu selection ('Total'), the start date of the desired period ('from 1/1/2007'), the end date of the desired period ('to 2-1-2007'), and an average degree of occupation for all groups of rooms ('Total Occupation 80 %'). There is thus presented (in Fig. 7: a portion of) a list 70 of groups ('Wing:'), rooms within the respective group ('Room') and the (average) degree of occupation of the room in the indicated period of time ('Degree of occupation'). The system can present the degree of occupation for periods of time in the past, by utilising historical occupation measurements carried out by the system. The system can, if a room reservation option is provided, also present the degree of occupation for periods of time in the future, by utilising registered room reservations, the presence indicator for the respective room(s) being set to the 'occupied' indicator.

Figs. 6 and 7 represent the degree of occupation in a percentage, the percentage indicating the ratio between the duration of actual use on the basis of the presence indications obtained with the presence measuring devices, on the one hand, and the total available duration of use, on the other hand.

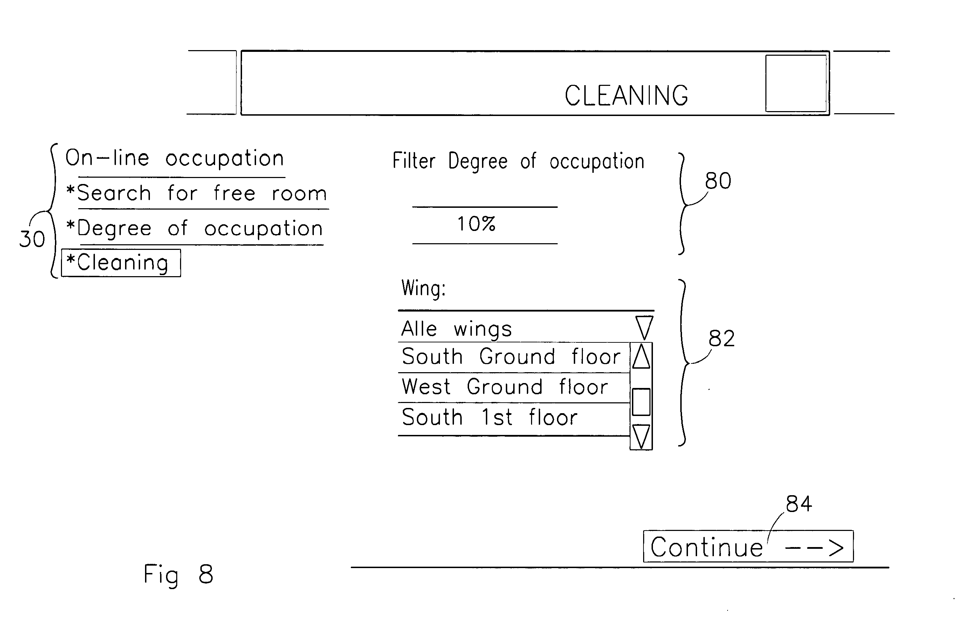

Fig. 8 shows a screen representation which can be generated by the server or a control member. Fig. 8 again shows the menu 30, so it is clear which function is being carried out. In Fig. 8 there has been selected the 'Cleaning' function which, after a user has entered selection criteria via a presented menu structure with the aid of an input device, can be used to establish a need to clean rooms.

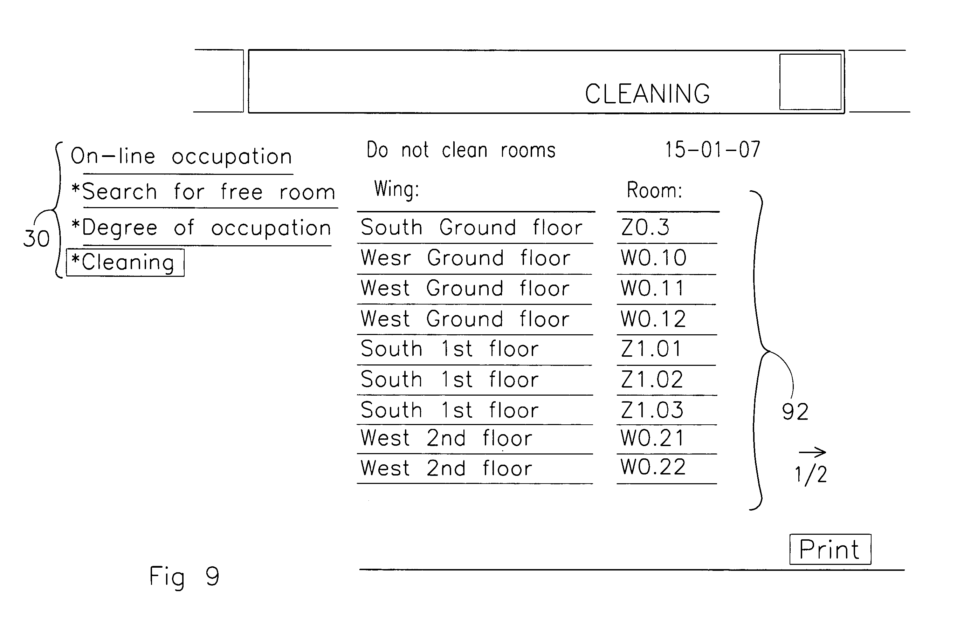

The selection criteria which are provided by the system are a threshold value of a degree of occupation, and a specific group of rooms, indicated by 'Filter degree of occupation' and 'Wing:' respectively. An input field 80 offers the option to enter with the aid of an input device a threshold value for a degree of occupation of between 0 % and, for example, 10 %, 20 % or 30 % (10 % has been selected in Fig. 8). A selection menu 82 offers available selection options for groups of rooms (respectively all groups ('All wings'), or a specific group (respectively 'South Ground floor', 'West Ground floor', 'South 1^{st} floor' and possible other groups which can be specified by scrolling in the menu 82). When a user has made suitable selections in the input field 80 and the selection menu 82, an indicator can be given to the system (indicated by 'Continue' field 84) to represent the rooms which do not need to be cleaned. This is shown in the screen representation according to Figure 9.

Fig. 9 again shows the menu 30, so it is clear which function is being carried out. There is presented a list 92 of rooms (denoted by 'Wing' and 'Room') which do not need to be cleaned, because they have a degree of occupation of at most 10 % on the specified date ('15-10-2007'). Obviously, the system can also be configured in such a way as to represent, by contrast, the rooms which need to be cleaned, i.e. the rooms which on the specified date have a degree of occupation greater than 10 %.

The system according to the invention can, for example, be used in training buildings or schools comprising classrooms and/or other rooms for general and specific use. The system according to the invention can, for example, also be used in offices comprising consultation rooms and/or other rooms which are intended for varying occupation. The system according to the invention can also, for example, be used in a hospital or nursing home comprising public areas or rooms.

The system according to the invention can easily be used both in new buildings and in existing buildings. Installation of the system requires merely limited, brief activity in each room which is to form part of the system. Use can be made of an infrastructure, in particular a computer network, which is normally already present for other purposes, has to be adapted merely to a limited extent and is additionally loaded merely to a very low degree. Rooms in various buildings that are physically set apart from one another by any distances can be incorporated easily and in a uniform manner into the system according to the invention. The system can flexibly be adapted to, for example, an altered division of buildings, alterations in the number or the nature of the rooms and the corresponding facilities, and the like.

It is to be understood that the described embodiments are merely examples of the invention that can be embodied in a broad range of configurations. Therefore, specific structural and functional details which are disclosed herein should be regarded not as entailing limitation but rather exclusively as a basis for the claims and as a representative basis to provide a person skilled in the art with sufficient information to carry out the invention. The terms and phrases which are used herein are intended not to entail limitation but rather to provide a comprehensible description of the invention.

The term "a/an", as used in the present document, is defined as one or more than one. The term "number", as used in the present document, is defined as two or more than two. The term "another", as used in the present document, is defined as at least a second or more. The term "comprising" and/or "having/with", as used in the present document, does not rule out other components which are not mentioned (i.e. does not entail limitation). The term "coupled", as used in the present document, is defined as connected, not necessarily directly, and not necessarily mechanically. The terms "program", "computer program" and the like, as used in the present document, are defined as a series of indicators which are intended to be carried out on a computer or computer system. A program, computer program, software or application program can comprise a subroutine, a function, a procedure, an object method, an object implementation, a runnable application program, an applet, a servlet, a source code, an object code, a shared library/dynamically loaded library and/or another set of indicators that is intended to be carried out on a computer or computer system.

## Claims

1. System for determining a human occupation of a number of rooms which are intended for a specific activity involving one or more persons, which system comprises:
a number of presence measuring devices for measuring human presence in the rooms, at least one presence measuring device being provided in each room, and the presence measuring device being configured for providing a presence indication which represents a 'free' indicator if no persons are present in the corresponding room and represents an 'occupied' indicator if persons are present in the corresponding room; and
a data processing device which is coupled to a memory device, an input device and an output device, and is configured for reading-out the presence measuring devices, and storing for each room, in accordance with a predetermined scheme in the memory device, of at least combinations of:
■ an identification indication concerning an identification of the room;
■ the presence indication pertaining to the room; and
■ a time stamp indication concerning the current date and time of registration of the presence indication,
and wherein the data processing device is further configured for:
■ receiving an input from the input device; and
■ in response to the input from the input device, representing, on the basis of the combinations of indications stored in the memory device and using the output device, an overview of rooms and their human occupation over time.

2. System according to claim 1, wherein the data processing device is configured for representing, using the output device, a current occupation of a group of rooms.

3. System according to any of the preceding claims, wherein the memory device also contains for each room:
■ an occupation indication concerning a maximum number of persons in the room, and the data processing device being configured for inputting, using the input device, a number of persons, and the data processing device further being configured for representing, using the output device, which room:
■ has a presence indication with a 'free' indicator, and also
■ has an occupation indication which is at least as high as the input number of persons.

4. System according to any of the preceding claims, wherein the processing device is configured for inputting, using the input device, one or more identification indications and a period of time, and the data processing device further being configured for representing, using the output device, a degree of occupation of the rooms specified by the one or more identification indications in the period of time.

5. System according to any of the preceding claims, wherein the data processing device is configured for inputting, using the input device, a reservation of a room to be reserved for a predetermined period of time, and the data processing device further being configured for setting the presence indication for the room to be reserved for the period of time concerned on the 'occupied' indicator, provided that the presence indication for the respective period of time was initially set to the 'free' indicator.

6. System according to any of the preceding claims, wherein the memory device also contains for each room:
■ a facility indication concerning facilities present in the room, the data processing device being configured for inputting, using the input device, a desired facility, and the data processing device further being configured for representing, using the output device, which room:
■ has a presence indication with a 'free' indicator, and also
■ has a facility indication which comprises the desired facility.

7. System according to any of the preceding claims, wherein the data processing device is configured for representing, on the basis of a degree of occupation of a room in a period of time and using the output device, a cleaning indication for the room.

8. System according to any of the preceding claims, wherein the data processing device is configured the representing, on the basis of a degree of occupation of a room in a period of time and using the output device, a lamp replacement indication for the room.

9. System according to claim 2, wherein the data processing device is configured for representing, using the output device, which room or rooms have a presence indication with an 'occupied' indicator.

10. System according to any of the preceding claims, wherein the data processing device comprises:
a number of control devices which are each coupled to at least one of the presence measuring devices; and
a server which is coupled to the control devices.

11. System according to any of the preceding claims, wherein the coupling between the server and the control devices is produced at least in part via the Internet.

12. System according to any of the preceding claims, wherein the presence measuring device is a movement sensor.

13. System according to any of the preceding claims, wherein the coupling between a presence measuring device and the data processing device is wireless.

14. Computer program comprising indicators which are intended to be carried out on the data processing device for the operation of the system according to any of the preceding claims.

15. Data carrier comprising a computer program according to claim 14.
